# EUROPEAN PATENT SPECIFICATION

(11) **EP 1 396 168 B1**
(45) Date of publication and mention of the grant of the patent: **18.02.2009**
(21) Application number: 02728279.7
(22) Date of filing: 26.04.2002
(51) Int. Cl.: H04W 36/20

(54) **CARRIER SELECTION METHOD**
TRÄGERAUSWAHLVERFAHREN
PROCEDE DE SELECTION DE PORTEUSE

(30) Priority: 30.05.2001 SE 0101898
(43) Date of publication of application: 10.03.2004
(73) Proprietor: TELEFONAKTIEBOLAGET LM ERICSSON (publ), 164 83 Stockholm (SE)
(72) Inventor: AKERBERG, Dag, S-196 31 Kungsängen (SE)
(74) Representative: Stenborg, Anders Vilhelm
(86) International application number: PCT/SE2002/000820
(87) International publication number: WO 2002/098161

(56) References cited:
- EP-A- 0 984 650
- EP-A1- 0 946 072
- GB-A- 2 285 724
- GB-A- 2 288 517
- US-A1- 6 130 907
- HASS G.J.R., MCLAUGHLIN H., POVEY S.: 'The effects of inter-system interference in UMTS at 1920 MHz' INTERNATIONAL CONFERENCE ON 3G MOBILE COMMUNICATION TECHNOLOFIES, 2000 (CONF. PUBL. NO. 471) 27 March 2000 - 29 March 2000, LONDON, UK, pages 103 - 107, XP002970659
- JOCYE A. ET AL: 'Orange/fujitsu wideband CDMA field trials-system overview' INTERNATIONAL CONFERENCE ON 3G MOBILE COMMUNICATION TECHNOLOGIES, 2000 (CONF. PUBL. NO. 471) 27 March 2000 - 29 March 2000, LONDON, UK, pages 6 - 10, XP002970660
- HARRI HOLMA; ANTTI TOSKALA: "WCDMA for UMTS" WCDMA FOR UMTS : RADIO ACCESS FOR THIRD GENERATION MOBILE COMMUNICATIONS, CHICHESTER : JOHN WILEY & SONS, GB, 1 January 2001 (2001-01-01), page 187-219,283-302, XP002193760

## Description

### TECHNICAL FIELD

The present invention generally relates to cellular communication systems and in particular to devices and methods for providing carrier selection for mobile stations associated with the communication systems. The invention further relates to devices and methods for carrier locking of mobile stations in idle mode, for carrier relocking of mobile stations in idle locked mode and for carrier handover for mobile stations in active mode.

### BACKGROUND

In mobile communication today, the available radio frequencies are divided in different frequency bands for dedicated use in e.g. TDD or FDD systems. The different carriers in the frequency bands are reserved for a specific operator to use. One operator has therefore one or several carriers to use for its communication system. However, even if the main power of the radio signals is emitted in the assigned frequency band, some energy will also appear in adjacent frequency bands due to the fact that the frequency filtering is not perfect, in particular at the mobile station side. Signalling in two adjacent frequency bands or carriers may therefore create interference.

In prior art, there are many methods and apparatuses, which detect an interference and either compensate for it, reduces the effect of the interference source in some way or simply changes the communication resource to an un-interfered communication resource. In cases where the interfering transmitters belong to one and the same system or at least to one and the same operator, communication between different system parts can help to solve the interference problems. In cases where the interfering sources belong to different operators, such procedures are difficult or impossible to provide. This makes interference from adjacent frequency bands troublesome. In some cases, the interference is not symmetric. An interfering source may in certain cases not be interfered itself, and if no additional information is available, the interfering sources will take no actions to reduce its interfering action.

A problem with methods for reducing interference between carriers of adjacent frequency bands according to prior art is that they have to rely on information from all parts of the system and on a joint effort for all parties to reduce the risk for interference. In cases where the communication of some reason is limited, interference may not be avoided.

An example is the European UMTS mobile system for FDD and/or TDD operation. In more detail, non-co-sited adjacent block systems suffer from a near-far interference mechanism. A mobile may be near a base station of the adjacent block operator, but far away from the closest own base station. The interfering signals will then be strong compared to the signals from the own base station, leading to harmful interference, when the adjacent channel interference rejection capability is limited.

In EP 0 910 181 A2, a method for allocating utilisation of multiple carriers in a wideband CDMA transmission system is disclosed. The utilisation/interference levels for each of the multiple carriers are determined and the selection of carriers is biased away from higher utilised/ interfered carriers. This method is of focused on a slightly different problem, namely on interference within the carriers of one and the same operator and does not handle inter-operator interferences.

In US 6,130,907, interference is detected and characterised by accumulating statistics for each energy spectrum in the system. However, there are no solutions of how to manage the available carriers in an efficient manner.

In US 6,041,238, an interference criterion is determined depending on a signal strength of a call request signal from the mobile station. It is determined whether interference occurs in a transmitting or receiving time slot relative to the interference criterion in a selected channel. When no interference occurs in the selected time slots, the channel is assigned to the mobile station. A problem with this method is that possible interference caused by the mobile station is not taken into account, only already existing interfering signals.

In EP 0 946 072, prevention of interference of adjacent frequencies in a cellular system is disclosed by selection between adjacent carrier frequency and non-adjacent carrier frequency. A cellular system A has access to a carrier frequency adjacent to a carrier frequency used in a cellular system B and a carrier frequency not adjacent thereto. In the method of preventing a risk of interference, a mobile station of cellular system A uses a non-adjacent carrier frequency if a certain measure is larger than a threshold value. The measure is based on power measurements performed by the mobile station on the perch channel from a base station of the cellular system B.

In EP 0 984 650, a method for performing handoffs in wireless communications systems is disclosed. A concentric cell base station has a micro cell and a macro cell that incorporates multiple timing protocols to extend the access range of the base station. The base station determines whether a handoff is to be performed using absolute path delay information.

In the document H. Holma and A. Toskala, WCDMA for UMTS: Radio access for third generation mobile communications, Chichester, John Wiley & Sons, GB, 1 January 2001, radio resource management for WCDMA is disclosed. The document evaluates interference situations that can occur between UTRA TDD mobile stations and base stations, UTRA TDD/FDD mobile stations and UTRA FDD/TDD base stations and UTRA FDD mobile stations and UTRA TDD mobile stations. Suggested methods of countering these forms of interferences include dynamic channel allocation, radio resource management, power control, network planning, co-siting, and inter-system or inter-frequency handover.

### SUMMARY

An object of the present invention is to reduce interferences between mobile stations and/or base stations associated with cellular communication systems operating on adjacent carriers.

It is a further object of the invention to use only "internal" mobile measurements in the interference reduction process. This means that the invention is operable also without any inter-operator communications.

The above objects are achieved by devices and methods according to the enclosed claims. In general words, a mobile station of a system having access to several carrier duplex entities adjacent to an external spectrum block, having a potential to cause interference, obtains a measure associated with a probability for the mobile station to produce interferences with the external spectrum block. A high probability corresponds to a low value of the measure and a low probability corresponds to a high value of the measure. Preferably, the measure is related to the radio distance from the closest own base station and typically related to the output power level from the mobile station. The measure is in turn used for selecting a candidate carrier duplex entity among available carrier duplex entities for the mobile station. These available carrier duplex entities are divided into the notations; edge and inner carrier duplex entities. The edge carrier duplex entity is defined as the carrier duplex entity most adjacent to the external spectrum block possessing a capability of causing interference, and an inner carrier duplex entity is defined as having a larger frequency separation to the external spectrum block than the edge carrier duplex entity. By then comparing the measure with threshold value a discrimination is obtained whether the measure exceeds or is lower than the threshold value. In the latter case, when the measure is lower than the threshold value, the probability for interference problems is high and the candidate carrier duplex entity should be selected for minimising any interference problems. This is provided by selecting an inner carrier duplex entity. On the other hand, if the measure exceeds the threshold value the carrier selection can be made more freely. However, in order to spare inner carrier duplex entities for mobile stations that have a higher need for them, preferably an edge carrier duplex entity should be selected. A mobile station in an idle mode then locks to a downlink carrier of this selected candidate carrier duplex entity, upon locking into the communication system from the idle mode to an idle locked mode. A mobile station in an idle locked mode first compares the downlink carrier of the candidate carrier duplex entity with the downlink carrier presently locked to. If the two carriers are different the mobile station relocks to the downlink carrier of the candidate carrier duplex entity. For a mobile station with a call in progress, i.e. in an active mode, a similar comparison between candidate carrier duplex entity and presently used carrier duplex entity as for idle locked mobile stations is performed. If the candidate carrier duplex entity is different from the one the mobile station presently uses, a carrier handover is performed to the candidate carrier duplex entity, without interrupting the call.

The major advantage of the present invention is that the total risk for interferences for mobile and base stations of adjacent spectrum blocks are markedly reduced even in cases where the adjacent spectrum blocks are assigned to different operators. This is accomplished by selecting the inner carrier duplex entity not only for mobile stations being or having a large risk to be exposed to interferences but also for those mobile stations that might produce interferences. This is most important since situations may arise when a mobile station causes interferences without in turn being exposed to any such interference.

### BRIEF DESCRIPTION OF THE DRAWINGS

The invention, together with further objects and advantages thereof, may best be understood by making reference to the following description taken together with the accompanying drawings, in which:
Fig. 1 illustrates a part of the spectrum block of the European Universal Mobile Telecommunications System (UMTS);
Fig. 2 is a schematic drawing illustrating interfering cells of two cellular systems;
Fig. 3 illustrates the interference mechanism for two FDD systems;
Fig. 4 illustrates the interference mechanism for two TDD systems;
Fig. 5 illustrates the interference mechanism for a FDD and a TDD system;
Fig. 6a is a flow diagram of the common overall steps of the carrier selection methods of the present invention;
Fig. 6b is a detailed flow diagram of one of the steps of Fig. 6a for a carrier locking method;
Fig. 6c is a detailed flow diagram of one of the steps of Fig. 6a for a carrier relocking method;
Fig. 6d is a detailed flow diagram of one of the steps of Fig. 6a for a carrier handover method;
Fig. 7 illustrates a mobile station according to the present invention; and
Fig. 8 schematically illustrates a part of a cellular communication system according to the present invention.

### DETAILED DESCRIPTION

The present invention is of special importance, but not limited to, cellular communication systems operating on adjacent frequency blocks and where each block consists of only a few carrier duplex entities, such as a Code Division Multiple Access (CDMA) based system of the European Universal Mobile Telecommunications System (UMTS) for Frequency Division Duplex (FDD) and/or Time Division Duplex (TDD) operations. The term "carrier duplex entity" is throughout the present document defined as a number of carriers, which together provides communication resources both from base stations to mobile stations, hereinafter denoted as downlink (DL) communication, and from mobile stations to base stations, denoted as uplink (UL) communication. The number of carriers within a carrier duplex entity may be equal to one, as for e.g. TDD system, or larger, e.g. two as for a conventional FDD system.

A "radio distance" may be used to denote a distance from a base station based on the propagation conditions. This radio distance reflects the power loss moving away from the base station. Note that two points with same radio distance from a base station do not have to have the same geographical distance to that base station. Mountains, buildings and similar objects may partially block or reduce the signals from the base station, leading to a larger propagation loss in some directions. Consequently, the words "close", "near", "far" etc. should in the present description be understood as used in a radio distance point of view.

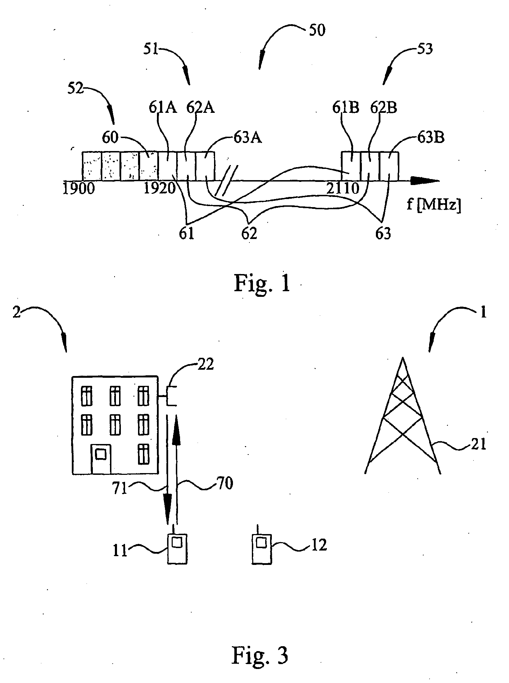

Referring to Fig. 1, part of the UMTS spectrum 50 is illustrated. The UMTS spectrum 50 is divided into different TDD and FDD spectrum blocks. One TDD block is indicated with reference number 52 and a FDD UL and a FDD DL block is denoted with 51 and 53, respectively. A TDD carrier duplex entity 60 is self-contained with broadcast, uplink and downlink control channels and traffic, both uplink and downlink, channels. A TDD carrier duplex entity comprises, consequently, only a single carrier. For FDD applications a carrier duplex entity 61, 62, 63 comprises at least two carriers, a first carrier for uplink 61A, 62A, 63A and a second carrier for downlink 61B, 62B, 63B signalling, including broadcast, control and traffic signals. Presently, the FDD carriers are typically used in pairs, one for uplink and the other for downlink. However, it may be possible to allocate more than two carriers to a FDD carrier duplex entity. The traffic may then be divided among the carriers so that for example a first carrier is used for uplink traffic, whereas a number of carriers are assigned for corresponding downlink traffic. It may also be possible to combine the FDD and TDD approaches, forming a hybrid. Each frequency separated FDD carrier pair could then in turn be divided into time slots, as for a TDD carrier.

In the present disclosure, "idle mode" is defined as a mode of a mobile station directly after being switched on. Consequently, in this mode the mobile station has not yet locked into a system. Once the mobile station has locked to a downlink carrier of the associated system, it enters an "idle locked mode". The mobile station then listens to this downlink carrier for any useful information from the base station. Further, if a mobile station has a call in progress, it is in the present disclosure, said to be in an "active mode". "Carrier handover" is, in the present disclosure, used to denote the action of switching a call in progress for a mobile station in an active mode between two carrier duplex entities of the same operator without interrupting the call.

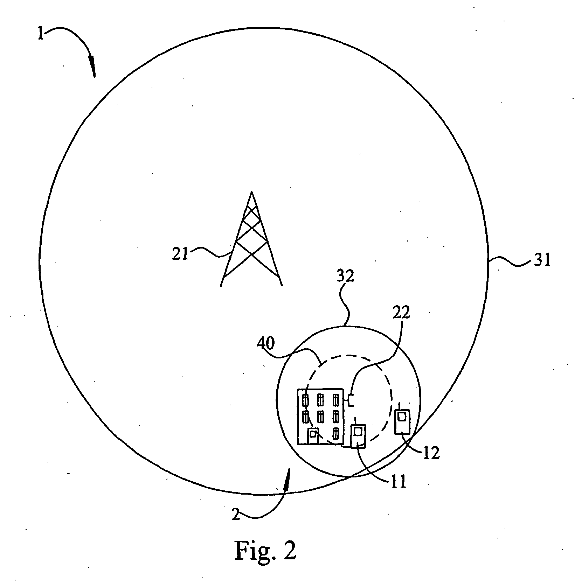

A cellular communication system comprises a number of cells, each one covering a certain geographical area. Within each cell, a base station conducts communication operations with a number of mobile stations. In Fig. 2, two such systems 1, 2 are schematically illustrated. The first system 1, of which only one single cell 31 is shown, has a base station 21 and covers a geographical area. A mobile station 11 associated with the first system 1 is present in the illustrated cell 31. The second system 2, also has a mobile station 12 associated therewith. This second system 2 has in Fig. 2 been illustrated with only one of its cells 32, with a base station 22.

If cells of the first and second system are adjacent, or even overlapping, interference problems between mobile stations 11, 12 and/or base stations 21, 22 of the two systems 1, 2 may arise. A certain form of interference, called near-far interference, may occur in cases when a mobile station 11 of the first system 1 presently is located near a base station 22 of the adjacent block second system 2, but relatively far away from the closest own base station 21. Thus, the signal strength from the base station 22 of the second system 2 will be very strong compared to the signal strength from the own base station 21.

Even though the mobile station 11 is assigned only to receive signals in a certain frequency band, some signals from adjacent frequency bands are anyway received in practice due to a non-complete interference rejection capability. In other words, the input signal filters of a mobile station 11 is typically not perfect and will allow some radiation energy from adjacent frequency bands. The level of the filter attenuation is typically a matter of cost and weight. This leads to that the mobile station 11 may sense an interference signal from base station 22, which is causing a significant disturbance even if they ideally use different frequency bands. In a similar manner, base station 22 may experience interfering signalling from mobile station 11 dupe 10 non-complete output frequency filters.

The above scenario is typical for situations when the first system 1 is a macro system and the second system 2 is a micro/pico system, as illustrated in Fig. 2. The cells 31 of the macro system 1 then cover relatively large geographical areas, whereas a cell 32 of the micro/pico system 2 covers a comparatively small area. Since the geographical area of a micro/pico system 2 cell 32 is smaller compared to that of the macro system 1 cell 31, several of the base stations 22 of the micro/pico system 2 may be positioned within one cell 31 of the macro system 1. The interference problem for mobile stations 11 of the macro system 1 is then serious since the probability that the mobile station 11 would be close to a base station 22 of the micro/pico system 2 at the same time as it is being far from its own closest base station 21 is non-negligible. This is true even if the average signal power of the micro/pico system 2 is small compared with the macro system 1.

For some communication systems, such as UMTS, each operator has typically only access to a few, in certain instances (TDD) only one, carrier duplex entity within the available spectrum block. Referring once more to Fig. 1, carrier duplex entities 60, 61, 62 and 63 of the UMTS spectrum 50 are used by different systems, belonging to one or several different operators. A first system might use spectrum blocks 51 and 53 consisting of three carrier duplex entities 61 to 63, whereas a second system may only have access to a single adjacent carrier duplex entity 60 of spectrum block 52. According to the above definition the edge carrier duplex entity is in this case the carrier duplex entity 61, most adjacent to the closest external frequency block 52 possessing a capability of causing interferences. The inner carrier duplex entity is in this case the carrier duplex entity 62 or 63, having a larger frequency separation to the closest external frequency block 52 and causing less interference, compared to the edge carrier duplex entity 61.

Now referring to both Figs. 1 and 2, to reduce any possible near-far interference problem, a mobile station 11 having potential access to two or more carrier duplex entities 61 to 63, shall according to the present invention avoid using the edge carrier duplex entity 61 and instead use an inner carrier duplex entity 62, 63, when positioned, in a radio strength point of view, far from the own base station 21.

By selecting an inner carrier duplex entity, the interference rejection capability to and from the interfered mobile station increases. In case of UMTS applications, the attenuation of a signal from an adjacent frequency band increases from 35 dB for the edge carrier duplex entity 61 to 45 dB for the first inner carrier duplex entity 62. The limitations in interference rejection capability are as briefly described above properties of the mobile equipment, in particular the adjacent channel selectivity of the receiver and the adjacent channel leakage ratio of the transmitter. These limitations cannot be significantly improved by extended base station filters or other similar means.

The limitation of interference rejection capability for the edge carrier duplex entity 61 leads to the creation of a relative large dead zone 40 around the base station 22 of the second system 2. The "dead zone" 40 may in reality consist of two circular zones, one caused by uplink interference and the other by downlink interference. A first dead zone is the area where the mobile station 11 of the first system 1 interferes with the base station 22. A second dead zone with a different radius may depending on technologies (FDD and/or TDD) occur due to interference from the base station 22 to the mobile station 11. The present invention is of special importance for cases where the first (uplink) dead zone is larger than the second (downlink) dead zone. This is always the case when the first system 1 is a FDD system having access to at least the carrier duplex entity 61 and the second system 2 is a TDD system operating on the carrier duplex entity 60. If the second dead zone is larger than the first, the mobile station 11 will be interfered by the donwlink from the base station 22 before it will interfere by the base station 22. Consequently, the interference of the second system 2 will be limited whereas the mobile station 11 may be severely interfered. Another dead zone may, depending on technologies, occur around the mobile station 12 of the second system 2 due to interference from the mobile station 11. In other words, the C/I ratio falls below an acceptable level. Problems will thus arise when the mobile station 11 comes so close to the base station 22 that it enters the dead zone 40. A weak downlink signal to the mobile station 11 typically implies that the mobile station 11 has to use high power to reach its own base station 21. Thus, the more distant in a radio point of view the mobile station 11 of the first system 1 is from the closest own base station 21, the higher transmitting power will be used. This is referred to as an uplink power control mechanism, which typically is available in most mobile communication systems of today. A high uplink transmitting power means a larger interference with the uplink communication of the second system. The dead zone 40 is thus relevant for a mobile station both for experiencing and causing a near-far interference. The dead zone 40 can for a typical UMTS application have a radius up to 140 m for the edge carrier duplex entity. If the mobile station 11 instead uses the inner carrier duplex entity 62, the interference area or dead zone 40 and thereby the interference probability may be reduced up to ten times.

The carrier selection of the present invention is preferably performed upon locking a mobile station to a system, at relocking to and/or during handover to a new carrier. Most preferably, the carrier selection is performed together with relocking of a mobile station in an idle locked mode.

When a mobile station is switched on, it is in an idle mode and has not yet been locked to a carrier duplex entity. The present invention is applicable upon accessing a system when a carrier duplex entity is selected and the mobile station is locked to a downlink carrier of the carrier duplex entity, i.e. the mobile station enters into an idle locked mode. If the mobile station is far from its own base station, a high probability to cause and/or be exposed to interference is present and therefore an inner carrier duplex entity should be selected and the mobile station should lock to the downlink carrier thereof. If, on the contrary, the mobile station is close to its own base station, so that the interference probability is reduced or non-existent, either carrier duplex entity could be used. However, in order to spare the inner carrier duplex entity for mobile stations with a high interference probability, it is preferable to select an edge carrier duplex entity and lock the low-interference mobile station to its downlink carrier.

When a mobile station has registered at a cell of the system operator and been locked to a downlink carrier, it is in an idle locked mode. When a subsequent call set-up takes place, the carrier duplex entity corresponding to that downlink carrier is usually used for the requested communication. A mobile station in an idle locked mode may according to one aspect of the present invention have to perform a relocking of the mobile station. This may be the case if the original locking was not performed according to the present invention. It may also be the case if the mobile station has moved within the cell or if the traffic or radio signalling conditions have changed since the mobile station registered at the cell. In such a case, the present choice of carrier may not necessarily be the best possible one. The present invention solves this situation by performing a carrier selection for the mobile station. Upon a situation where the probability for near-far interferences is high an inner carrier duplex entity should be selected, unless already used. The mobile station then relocks to the downlink carrier of the inner carrier duplex entity, just as for an idle mode mobile station, and consequently the interference probability decreases. Relocking to an edge carrier duplex entity is performed analogously.

According to the spirit of the present invention, the call set up and following traffic is normally made on the carrier duplex entity selected according to the present invention.

If the mobile station has a call in progress, it is said to be in an active mode. During the call, the mobile station may be moved from a location of low near-far interference, where an edge carrier duplex entity typically is used, to a location of high near-far interference probability, where, according to the present invention, an inner carrier duplex entity should be used. In such a case, a carrier handover should preferably be performed from the edge to the inner carrier duplex entity without interrupting the call. If handover is not performed, any interference may disturb or even interrupt the call.

The measure for distinguishing between the need for using an edge or an inner carrier duplex entity is associated with a probability of the mobile station to produce interference with adjacent external spectrum blocks. A high probability corresponds to a low value of the measure and a low probability corresponds to a high value of the measure. For mobile stations with an uplink power control, the measure is preferably at least partly based on a propagation loss from a closest own base station. A high propagation loss corresponds to a low value of the distinguishing measure, since the interference probability then is high.

A high propagation loss sensed by a mobile station means that the mobile is at a relatively large radio distance from the own base station. The uplink power control will in such a situation regulate the own transmission power in order to assure a reasonable receiving signal at the base station. A high transmission power will, however, increase the interference probabilities between uplink traffic on adjacent carrier duplex entities. Propagation loss is therefore a suitable parameter to base a distinguish measure on, associated with interference probability. Preferably, the propagation loss measure is based on the radio distance between the mobile station and its own base station and is e.g. determined by the mobile station by measuring a radio field strength (RSSI) of the broadcast control channel of the base station. Note that a low radio field strength RSSI corresponds to a high propagation loss measure, i.e. the RSSI is basically inverse of the propagation loss measure. A low RSSI value thus corresponds to a low distinguishing measure value.

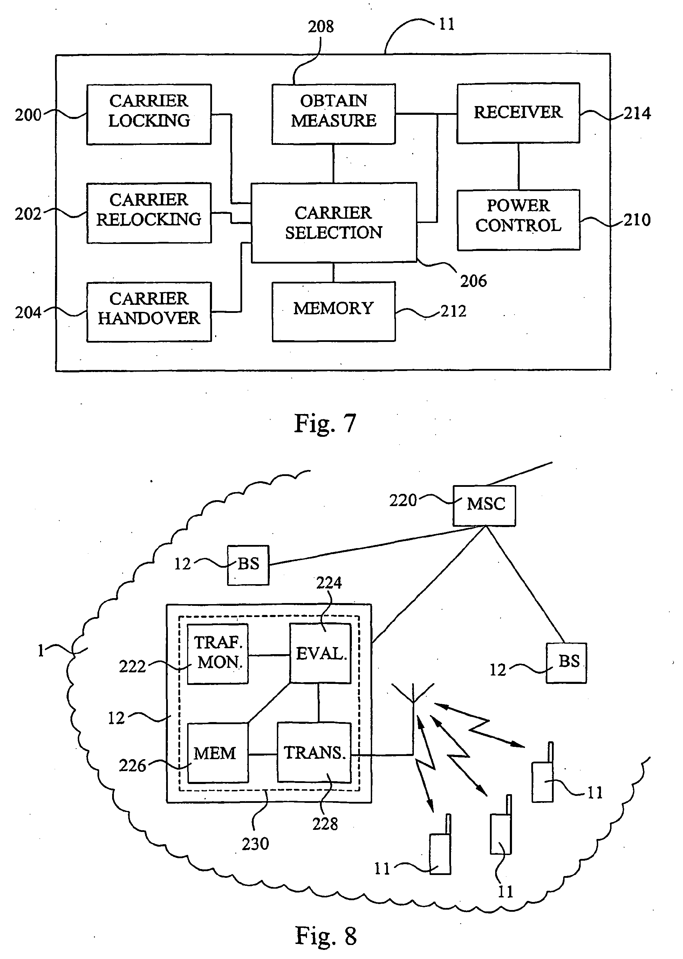

Referring to Fig. 7, a block scheme of a mobile station 11 is illustrated. The mobile station 11 is provided with an uplink power control 210. The uplink power control 210 obtains a radio strength field measure from a receiver 214, which measure is used for its internal control purposes, but is also provided to a means 208 for obtaining an interference probability measure, which measure is forwarded to a selection means 206. The distinguishing procedure, in the selection means 206, is based on a comparison between the obtained measure and a threshold value. By comparing the obtained measure with the threshold value a discrimination is obtained whether the measure exceeds or is lower than the threshold value. In the latter case, when the measure is lower than the threshold value, the probability for interference is high and a candidate carrier duplex entity should according to the present invention be selected by the selecting means 206 from inner carrier duplex entities. On the other hand, if the measure exceeds the threshold value, the interference risk is low and an edge carrier duplex entity could be allowed to be selected, by the selecting means 206, as a candidate carrier duplex entity. A mobile station 11 in an idle mode then, as mentioned above, locks to the downlink carrier of this selected candidate carrier duplex entity by locking means 200. Upon locking into the communication system the mobile station 11 goes from the idle mode to an idle locked mode. A mobile station 11 in an idle locked mode first compares the downlink carrier of the candidate carrier duplex entity with the downlink carrier presently locked to. If the two carriers are different the mobile station 11 relocks, by using relocking means 202, to the downlink carrier of the candidate carrier duplex entity. For a mobile station 11 with a call in progress, i.e. in an active mode, a similar comparison between candidate and presently used carrier duplex entities is performed. If the candidate carrier duplex entity is different from the carrier duplex entity the mobile station 11 presently uses, a carrier handover by handover means 204 to the candidate carrier duplex entity is performed without interruption of the call. In the illustrated embodiment, the mobile station 11 comprises of all three means 200, 202, 204. However, as anyone skilled in the art understands, the present invention also operates with only one or two of the means 200, 202 and/or 204 connected to the selecting means 206.

Up to now, the description has been based on the assumption that the threshold value used for switching from an inner carrier to an edge carrier is identical to the threshold value used for switching from an edge carrier to an inner carrier. This may very well be an advantageous solution in some applications. However, in systems where the mobile stations have a tendency to move frequently between the areas having a measure below and above the threshold, respectively, frequent carrier changes may be the result. Every carrier change requires a certain processor capacity and it might be of interest to reduce the number of unnecessary changes. This can easily be achieved by introducing any type of hysteresis functionality into the procedure. For instance, a time period can be introduced, within which no further carrier changes are permitted based on the present invention.

In a preferred embodiment, two threshold values are introduced. A first threshold value is used to determine if an inner carrier should be selected and a second threshold value is used to determine if an edge carrier should be selected. The hysteresis functionality arises when setting the second threshold higher than the first threshold. An inner carrier is selected when the measure is lower than the first threshold. Even if the measure exceeds the first threshold again, the inner carrier is kept, until the measure reaches the higher second threshold. A larger threshold value difference will increase the hysteresis effect.

In most part of the present disclosure, the description is simplified by using only one threshold value. However, from the above discussion, anyone skilled in the art understands that a set of threshold values can be used in all embodiments, if requested.

The threshold value (or values) may be obtained in different ways. In one embodiment, as in fig. 7, the threshold value (values) may be stored as a standard threshold value in a memory means 212 in the mobile station 11. This standard threshold value could be provided e.g. by the SIMS chip at registration as a subscriber of the operator. Alternatively, the standard threshold value could be the last used threshold value in a previous call. Preferably, the threshold value is transmitted from a base station, either as a repeated broadcast message, or at registering to the cell, or upon request of a specific mobile station. Means for such information transfer is readily available for mobile stations in idle locked mode and active mode, respectively.

For mobile stations in idle mode, the only information transferring possibilities are broadcast signalling from the base stations intended to inform any mobile stations in idle mode about the operator identity. By also broadcasting threshold information in a similar fashion, a good choice of a carrier to lock to, can be achieved. However, in a preferred embodiment, the registration and locking to a carrier takes place in a conventional manner. A subsequent relocking according to the principles set forth in the present invention are applied, when appropriate information easily can be transmitted via the downlink carriers to which the mobile station is locked.

A typical preferred procedure would thus be as follow. A mobile station is turned on and searches for a suitable carrier duplex entity of an allowed operator. A carrier duplex entity with sufficient strength is found and the mobile station gets registered at the cell and locked to the downlink carrier of the carrier duplex entity found. When registered, the mobile station sends a request for an updated threshold value and/or carrier notations. Alternatively, the threshold value is provided as a part of the registration process. A further alternative is that the mobile station listens to the downlink information from the base station for any threshold and/or carrier notation information. A relocking procedure according to the present invention is then performed with currently used threshold and notations.

Returning to Fig. 7, the transmitted threshold value is preferably received by the receiver means 214 in the mobile stations. The stored standard value in the memory means 212 may then either be fixed or may change during time. The most recently used threshold value could be stored and used as standard value or the standard value may be changed as soon as a new threshold value is received from a base station. The threshold value may in one embodiment be based on a radio signal strength threshold value (RSSI_{T}). The RSSI_{T} is preferably repeatedly transmitted from the base stations and received by the mobile station 11. The mobile station 11 then compares the RSSI_{T} with the measured RSSI, and if RSSI<RSSI_{T} an inner carrier duplex entity is selected by means 206 as candidate carrier duplex entity whereas if RSSI>RSSI_{T} the edge carrier duplex entity may be used.

The threshold value may preferably be adapted depending on the traffic load and recorded history of link quality and outage. If many mobile stations are present in a cell, it may be possible that at one instance several of the mobile stations are far from the base station and therefore are likely to be exposed to near-far interferences. If the threshold value is fixed, these far distant mobile stations would all lock to the inner carrier duplex entity and the remaining few mobile stations close to the base station would use the edge carrier duplex entity. The communication resources of the inner carrier duplex entity may then be overloaded so that some calls to these mobile stations locked thereto may be interrupted or blocked. A preferred solution is to adapt, in this case decrease, the threshold value so that fewer mobile stations are locked to the inner carrier duplex entity. The opposite is also true, i.e. if too many mobile stations are locked to the edge carrier duplex entity the threshold value should be increased, leading to an increased usage of inner carrier duplex entities. Preferably, the threshold value should subsequently be adapted in such a way that as many mobile stations are locked to inner carrier duplex entities as possible within the limits of acceptable outage and some marginal.

The adaptation of the threshold value (or values) can be performed at certain rates. A frequent adaptation provides an updated and probably optimised value. The threshold value may thus if required be updated every time a new measure of the traffic situation is available. However, such frequent updating may occupy considerable processor power and transmission capabilities. The adaptation rate can in such cases instead be controlled by the time between successive broadcasting of new values or by a time between successive evaluations of the traffic situation set by the operator. The average traffic situation is typically varying quite slowly, and evaluations for new threshold values are unlikely to be required more frequently than e.g. every 10th minute or even less often. During some periods, e.g. at nights or weekends, the need for threshold adaptations are probably even less. A time period of one or several hours between successive threshold evaluations is not unthinkable. For systems having a high margin of transmission capacity or very small traffic situation variations, adaptation rates of days, weeks or even years may be acceptable.

In order for the mobile station to know what is the edge and inner carrier duplex entities, respectively, the mobile station 11 has to be provided with some notations describing the carrier situations. Such notations of the edge and inner carrier duplex entities may be stored in the mobile stations 11 as standard notations in memory means 212, and/or be transmitted by base stations to receiver means 214 in the mobile station 11. This information may be treated in an analogue way as the threshold values, discussed above.

In Fig. 8, an embodiment of a part of a cellular communication system according to the present invention is illustrated. The system 1 comprises a number of base stations 12 interconnected by a network of MSCs 220 and other common network units. These parts of the communication system operate according to conventional technique and are therefore not discussed in detail. Each base station 12 covers a certain area and has access to at least two carrier duplex entities for communication with mobile stations 11 within its own cell. The base station 12 comprises means 222 for monitoring the present traffic situation within the base station. The number of registered mobile stations, the number of calls in progress, transmission conditions etc. are monitored. These data are provided to means 224 for evaluating a threshold value for use according to the present invention. The data from the monitoring means 222 is combined with stored history of link quality and outage from a memory 226, and a currently appropriate threshold value is continuously or intermittently determined. The threshold value may also be stored in the memory 226. The memory 226 preferably also comprises data concerning notations of carriers, necessary to determine which carrier is an edge carrier and which is an inner carrier. The system operator has to enter information about the use of adjacent block carriers. Such information is also preferably stored in the memory 226.

During the registration procedure of a mobile station 11 and/or upon request of a registered mobile station 11 and/or at repeated occasions, information about the present threshold and the carrier notations are transmitted from the base station 12 to the mobile stations 11. This procedure is performed by a transmission means 228, which retrieves data from the memory 226 and/or from the evaluation means 224. This data is the only data provided by the system 1 to the mobile stations 11 for performing the procedures according to the present invention. All other necessary information is obtained locally by the mobile station 11. This means that a very small quantity of data has to be communicated within the system network in order to perform the procedures according to the present invention.

In the described embodiment, the monitoring means 222, the evaluation means 224, the memory 226 and the transmission means 228 are comprised in a carrier selection control means 230 in the base station. As anyone skilled in the art understands, the different functions of the carrier selection control means 230 could instead be comprised in other parts of the system or even distributed over several locations. The threshold values could e.g. be controlled in a more centralised manner, e.g. by a radio network controller (RNC), supervising a group of base stations. However, in the preferred embodiment the base station comprises at least a major part of the functionality.

The embodiment of Fig. 8 is as anyone skilled in the art understands also applicable in relevant part to existing of future systems, even if the same system design is not used.

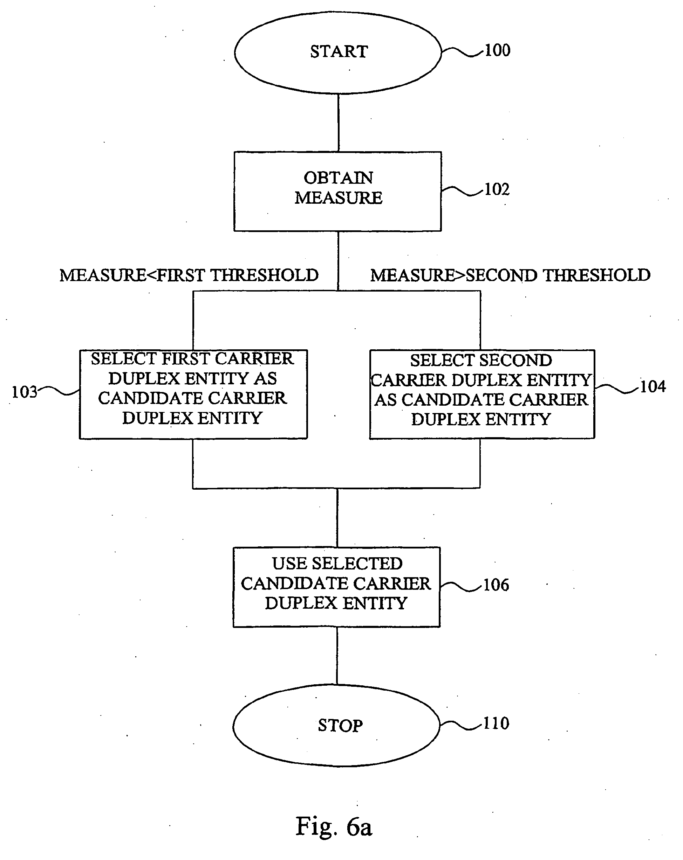

The carrier selection method of the present invention is briefly described in Figs 6a to 6d. The selection procedure starts in a mobile station in step 100. In step 102, a measure associated with the probability for a mobile station to produce interference with adjacent external spectrum blocks is obtained. The measure is then compared to a first threshold value, transmitted to the mobile station from a base station or stored in the mobile station. If the measure is lower than the first threshold value, the mobile station has a large radio distance to its own base station and the risk for near-far interference is large. The mobile station should then in step 103 select an inner carrier duplex entity as a candidate carrier duplex entity. On the other hand, if the measure exceeds a second threshold value being equal to or larger than the first threshold value, the radio distance of the mobile station to the base station is relatively short and the probability for near-far interference is low. The mobile station may then select any carrier duplex entity. But, to spare inner carrier duplex entities for mobile stations with a high probability for producing or being exposed to interferences, the edge carrier duplex entity may preferably be selected as the candidate carrier duplex entity, as in step 104. In step 106 the mobile station uses the selected candidate carrier duplex entity for locking, relocking, call set up or handover and the carrier selection method is completed in step 110.

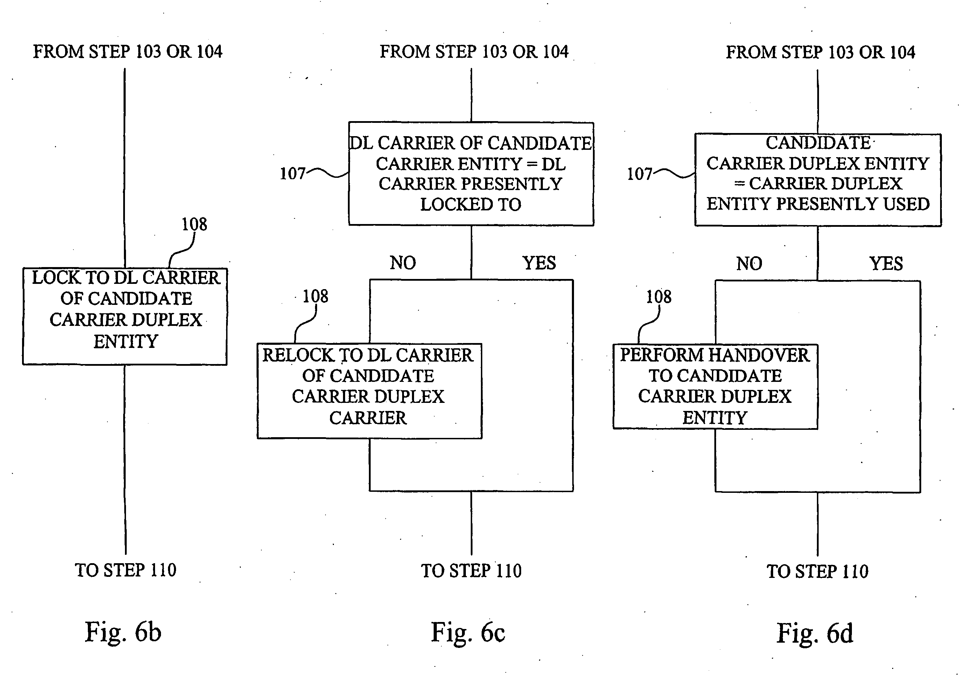

Figs. 6b to 6d describe preferred manners to accomplish the using step 106 in Fig. 6a in more detail for mobile stations in different modes. Mobile stations in an idle mode that will lock into a system should perform the using step according to Fig. 6b. In step 108, the idle mode mobile station locks to the downlink carrier of the selected candidate carrier duplex entity and thereby enters an idle locked mode. The procedure then continues to step 110, where the selection method is ended.

Fig. 6c applies for a mobile station in an idle locked mode, i.e. already locked to a carrier duplex entity of a system. In step 107, the mobile station compares the downlink carrier of the candidate carrier duplex entity with the downlink carrier presently locked to. If the two downlink carriers are identical the method proceeds to step 110 and ends. But, if the downlink carrier locked to is different from the downlink carrier of the candidate carrier duplex entity the mobile station relocks to this candidate duplex entity downlink carrier and the procedure is ended in step 110.

A mobile station having a call in progress, i.e. being in an active mode should follow the using step according to Fig. 6d. Firstly, the mobile station compares the candidate carrier duplex entity with the carrier duplex entity presently used. If they are identical the method then continues to step 110 and is ended. If on the other hand the two carrier duplex entities are different, the mobile station performs a carrier handover to the candidate carrier duplex entity, without interruption of the call. The procedure is then ended in step 110.

The present invention will now be described with reference to three exemplifying scenarios, Figs. 3 to 5, where the invention with advantage may be applied. The scenarios should merely been seen as illustrative non-exclusive examples that do not in any sense limit the scope of the invention.

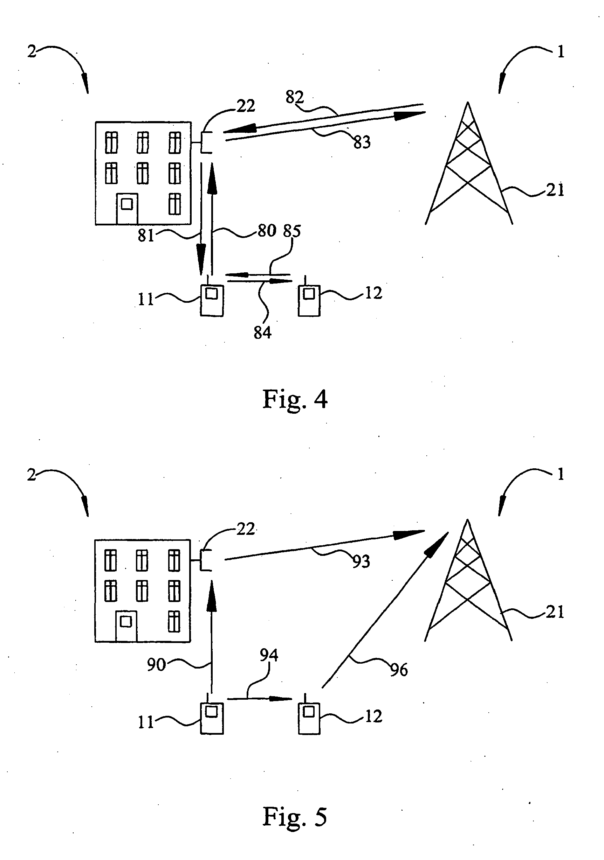

In Fig. 3, as well as in the following two illustrations Figs. 4 and 5, the first system 1 is represented as a macro system with a base station 21 and having a mobile station 11, locked thereto. The second system 2 is a micro system, comprising a base station 22 and having an associated mobile station 12. Near-far interferences of Figs. 3 to 5 could be avoided if e.g. both systems 1, 2 belonged to the same operator and information about the situation could be communicated therebetween. In this scenario such communication is not possible since the two systems 1, 2 belong to different operators. The worst interferences cases will be avoided if the mobile station 11 distant from base station 21 (whereby it transmits at maximum power and receives a minimum power), according the present invention, does not use the carrier duplex entity adjacent to the spectrum block of the second system, i.e. not use the edge carrier duplex entity. The interference risk can by the present invention be reduced without any information passed between the two interfering systems. As mentioned above, a switch from the edge to the first inner carrier duplex entity reduces the interference about 10 dB. An interference reduction of 10 dB corresponds to ten times smaller interference area and thus a ten times lower interference probability. This probability may in similar ways be decreased further by selecting an inner carrier duplex entity with larger frequency separation to the adjacent spectrum block than the first inner carrier duplex entity. The opportunity to use the present invention depends on the number of carrier duplex entities available to each system. Three most plausible situations for UMTS applications are as follow:
- Each system 1, 2 has only one carrier duplex entity. This case is irrelevant in this context.
- The macro system 1 has two carrier duplex entities and the micro system 2 has one carrier duplex entity.
- Both systems 1, 2 have two carrier duplex entities.

In Fig. 3 two FDD systems 1, 2 are illustrated operating on adjacent spectrum blocks. If the two systems 1, 2 are co-sited there will be no near-far interference problems. Though, systems operating on adjacent blocks do often not co-site their base stations, and if the first system 1 is a macro system and the second system 2 is a micro/pico system, co-siting is not possibly due to the large difference in cell sizes. Therefore the most common scenario is if the two systems are not co-sited and near-far interference may be present.

In the first situation the macro system 1 has access to two carrier duplex entities whereas the micro system 2 only has a single carrier duplex entity. Mobile stations 11 using the edge carrier duplex entity will be interfered by the downlink 71 from base station 22 when coming close thereto. When interference is detected, mobile stations 11 locked to the edge carrier duplex entity automatically will make handover or relock to the inner carrier and thereby decreasing the interference.

If the mobile station 11 is in an active mode, i.e. has a call in progress, and comes close to the base station 22, the mobile station 11 not only experiences interference from the downlink 71 from base station 22, but also causes interference 70 on the uplink to the base station 22. The more distant the mobile station 11 is from its own base station 21 the higher transmitting power must be used to reach the base station 21. Increased transmitting power leads to increased interference area around the base station 22. This interference of the uplink to base station 22 will affect any mobile stations 12 in active mode, belonging to the micro system 2. When such interference occurs, the mobile station 12 has no escape, since the system 2 only has a single carrier duplex entity, and the call may be interrupted.

If the mobile station 11 senses the risk of interference 71 before itself interferes 70 the uplink of mobile stations 12 of the second system 2, a handover from the edge to the inner carrier duplex entity will be performed, reducing the interference risk. If the mobile station 11 is close to the interfering source (base station 22), and the control signalling is interfered, a handover may not be possible. The present invention reduces the risk for such a call interruption by locking mobile stations 11 with a high probability for producing/being exposed to interference to inner downlink carriers already in the idle locked mode and thereby lowers the probability for interferences.

If both systems 1, 2 have access to two carrier duplex entities each, any mobile station experiencing an interference may change carriers and the problem may be reduced. However, also here the present invention improves the interference reduction. The invention is in this case with advantage applicable to both systems 1, 2.

If the situation in Fig. 3 instead concerns two macro systems with at least two carriers each, the basic features are still the same. The two macro systems may for instance be wideband CDMA systems using FDD, which have been assigned to adjacent frequency bands. Co-siting of the base stations may according to the discussions above solve some interference problems. However, in many cases, co-siting is not suitable or preferred by other reasons. In such cases, the present invention offers a possibility to reduce interference, and may preferably be used in both systems in parallel.

In Fig. 4 two TDD systems, a macro 1 and a micro 2 system, are illustrated. If both systems are UL/DL synchronised (and not co-sited) the similar interference problems 80, 81 as for two FDD systems are present. But, if the two TDD systems 1, 2 are not UL/DL synchronised other interferences arise between the base stations 82, 83 and between the mobile stations 84, 85. The need for the present invention is thus also present in TDD-TDD systems.

The interference mechanism for a FDD-TDD scenario is illustrated in Fig. 5. The macro system 1 is a FDD system, whereas the micro system 2 is based on TDD. This is the case for the European UMTS spectrum allocation, where the TDD system 2 typical only has one carrier duplex entity and the FDD system 1 has access to at least two carrier duplex entities. The TDD spectrum block is assumed to be adjacent to the FDD uplink spectrum block

In Fig. 5, the uplink traffic from mobile station 11 may interfere with the uplink traffic from mobile station 12, i.e. cause an interference 90. The uplink traffic from mobile station 11 may also interfere 94 with downlink traffic to mobile station 12. The opposite is also true, i.e. mobile station 12 and base station 22 will interfere 93, 96 with uplink traffic to base station 21. However, this is normally of little significance, since those distances are much larger than for the interferences 90 and 94. From this, it is evident that mobile station 11 will not be exposed to any interference at any time. A method according to prior art, which changes carrier as a respond of an experienced interference in a mobile station will never come into operation and the interferences caused by mobile station 11 will continue. On the other hand, mobile station 12 and base station 22 will experience the interference but are unable to change carrier duplex entity since only one carrier duplex entity is available. The present invention improves the situation by selecting the inner carrier duplex entity for the mobile station 11 when the probability for it cause interference is high although it is not exposed to any interference itself.

The present invention also improves situations where both the FDD 1 and TDD 2 system has two carrier duplex entities, since the control signalling sometimes may be blocked by any occurring interference for one of the systems and consequently only a single carrier duplex entity is available at that occasion.

Since the present invention provides a reduced risk for the users to be interfered, the availability of the present invention could be regarded as an option of an enhanced quality of service. This means that users with high demands for reliability may select the option of being connected to the procedure of the present invention against a higher cost, while users being more robust for interferences may select a cheaper alternative, without the carrier selection procedure of the present invention. This means that not all mobile stations connected to a system according to the present invention by necessity have to comprise the devices according to the present invention or use the procedures according to the present invention. Also, the choice of using the present invention or not could also be made on a call-to-call basis. However, from a system point of view, it is preferable if all mobile stations associated with the system make use of the present invention, since the overall interference will be reduced.

The embodiments described above are merely given as illustrative examples of the present invention, and it should be understood that it is not limited thereto. Further modifications, changes and improvements that retain the basic underlying principles disclosed and claimed herein are within the scope of the invention.

## Claims

1. A method of carrier selection for a mobile station (11) of a cellular communication system (1) using a spectrum block (51) having at least a first (62, 63) and a second (61) carrier duplex entity, said carrier duplex entity (61, 62, 63) being defined as a number of carriers which together provides for both uplink and downlink communication, said number being equal or larger than one, comprising the steps of:
electing a candidate carrier duplex entity for said mobile station (11); and
locking said mobile station (11) to a downlink carrier of said candidate carrier duplex entity,
**characterized by** the step of:
obtaining a measure associated with a probability for said mobile station (11) to produce interference with adjacent external spectrum blocks (52) used by an external communication system (2), whereby a low value of said measure is connected to a high interference probability, said measure is obtained without any communication between said cellular communication system (1) and said external system (2) and based solely on measurement of a signal originating from said cellular communication system (1), said selecting step in turn comprises selecting said first carrier duplex entity (62) as said candidate carrier duplex entity if said measure is lower than a first threshold value, said first carrier duplex entity (62, 63) having a larger frequency separation to said external spectrum blocks (52) than said second carrier duplex entity (61).

2. The method according to claim 1, **characterized in that** said selecting step further comprises selecting said second carrier duplex entity (61) as said candidate carrier duplex entity if said measure exceeds a second threshold value, said second threshold value being equal or larger than said first threshold value.

3. The method according to claim 2, **characterized in that** said second threshold value is larger than said first threshold value.

4. The method according to claim 1, **characterized by** the further step of:
performing any call set up and following traffic on the carrier duplex entity associated with the downlink carrier, to which said mobile station (11) is locked at the time for said call set up.

5. The method according to any of the claims 1 to 4, **characterized by** transmitting at least one of said first and second threshold values to said mobile station (11) upon request by said mobile station (11), or upon registering to said system (1).

6. The method according to any of the claims 1 to 5, **characterized by** transmitting notations of said first (62, 63) and second (61) carrier duplex entity to said mobile station (11) upon request by said mobile station (11), or upon registering to said system (1).

7. The method according to any of the claims 1 to 6, **characterized in that** said mobile station (11) has uplink power control and said measure is at least partly based on a propagation loss from a closest own base station (21).

8. The method according to claim 7, **characterized in that** said measure is dependent on a radio signal strength of a broadcast control channel.

9. The method according to any of the claims 1 to 8, **characterized by** adapting at least one of said first and second threshold values based on traffic load and recorded history of link quality and outage.

10. The method according to any of the claims 1 to 9, **characterized by** storing at least one of said first and second threshold values in hardware in said mobile station (11).

11. The method according to any of the claims 1 to 10, **characterized by** storing notations of said first (62, 63) and second (61) carrier duplex entity in hardware in said mobile station (11).

12. A cellular communication system (1), comprising:
a number of base stations (21) having means for communication with mobile stations (11) and using a spectrum block (51) having at least a first (62, 63) and a second (61) carrier duplex entity, said carrier duplex entity (61, 62, 63) being defined as a number of carriers which together provides for both uplink and downlink communication, said number being equal or larger than one;
selecting means for selecting a candidate carrier duplex entity; and
at least one of the means of the following list:
means for locking mobile stations (11) being in an idle mode to a downlink carrier of said candidate carrier duplex entity;
means for relocking mobile stations (11) being an idle locked mode to a downlink carrier of said candidate carrier duplex entity if said downlink carrier is different from a downlink carrier, to which said mobile stations (11) presently is locked to; and
means for performing a carrier handover to said candidate carrier duplex entity if said candidate carrier duplex entity is different from a carrier duplex entity presently used by said mobile stations (11),
**characterized by**:
means for obtaining a measure associated with a probability for said mobile stations (11) to produce interference with adjacent external spectrum blocks (52) used by an external communication system (2), whereby a low value of said measure is connected to a high interference probability, said measure is obtained without any communication between said cellular communication system (1) and said external system (2) and based solely on measurement of a signal originating from said cellular communication system (1), said selecting means being connected to said means for obtaining said measure and being arranged for selecting said first carrier duplex entity (62, 63) as said candidate carrier duplex entity if said measure is lower than a first threshold value, said first carrier duplex entity (62, 63) having a larger frequency separation to said external spectrum blocks (52) than said second carrier duplex entity (61).

13. The system according to claim 12, **characterized by** means for performing any call set up and following traffic on the carrier duplex entity associated with the downlink carrier, to which mobile stations (11) being in an idle locked mode are locked at the time for said call set up.

14. The system according to claim 12 or 13, **characterized in that** said selecting means in turn comprises means for selecting said second carrier duplex entity (61) as said candidate carrier duplex entity if said measure exceeds a second threshold value, said second threshold value being equal or larger than said first threshold value.

15. The system according to claim 14, **characterized in that** said second threshold value is larger than said first threshold value.

16. The system according to any of the claims 12 to 15, **characterized by** uplink power control means and in that said measure is at least partly based on a propagation loss from a closest own base station (21).

17. The system according to claim 16, **characterized in that** said measure is dependent on a radio signal strength of a broadcast control channel.

18. The system according to any of the claims 12 to 17, **characterized by** transmitting means (228) transmitting at least one of said first and second threshold values and/or notations of said first (62, 63) and second (61) carrier duplex entity.

19. The system according to any of the claims 12 to 18, **characterized by** means (224) adapting at least one of said first and second threshold values based on traffic load and recorded history of link quality and outage.

20. A mobile station (11) in of a cellular communication system (1) using a spectrum block (51) having at least a first (62, 63) and a second (61) carrier duplex entity, said carrier duplex entity (61, 62, 63) being defined as a number of carriers which together provides for both uplink and downlink communication, comprising:
selecting means (206) for selecting a candidate carrier duplex entity for said mobile station (11); and
at least one of the means of the following list:
means (200) for locking said mobile station (11) to a downlink carrier of said candidate carrier duplex entity upon locking into said communication system (1) from an idle mode to an idle locked mode;
means (202) for relocking said mobile station (11) to a downlink carrier of said candidate carrier duplex entity if said downlink carrier is different from a downlink carrier, to which said mobile station (11) presently is locked to; and
means (204) for performing a carrier handover to said candidate carrier duplex entity if said candidate carrier duplex entity is different from a carrier duplex entity presently used by said mobile station (11),
**characterized by**:
means (208) for obtaining a measure associated with a probability for said mobile station (11) to produce interference with adjacent external spectrum blocks (52) used by an external communication system (2), whereby a low value of said measure is connected to a high interference probability, said measure is obtained without any communication between said cellular communication system (1) and said external system (2) and based solely on measurement of a signal originating from said cellular communication system (1), said selecting means (206) being connected to said means (208) for obtaining said measure and being arranged for selecting said first carrier duplex entity (62, 63) as said candidate carrier duplex entity if said measure is lower than a first threshold value, said first carrier duplex entity (62, 63) having a larger frequency separation to said external spectrum blocks (52) than said second carrier duplex entity (61).

21. The mobile station according to claim 20, **characterized by** means for performing any call set up and following traffic on the carrier duplex entity associated with the downlink carrier, to which said mobile station (11) is locked at the time for said call set up.

22. The mobile station according to claim 20 or 21, **characterized in that** said selecting means (206) in turn comprises means for selecting said second carrier duplex entity (61) as said candidate carrier duplex entity if said measure exceeds a second threshold value, said second threshold value being equal or larger than said first threshold value.

23. The mobile station according to claim 22, **characterized in that** said second threshold value is larger than said first threshold value.

24. The mobile station according to any of the claims 20 to 23, **characterized by** receiver means (214) for receiving at least one of said first and second threshold values and/or notations of said first (62, 63) and second (61) carrier duplex entity.

25. The mobile station according to any of the claims 20 to 24, **characterized by** uplink power control means (210) and in that said measure is at least partly based on a propagation loss from a closest own base station (21).

26. The mobile station according to claim 25, **characterized in that** said measure is dependent on a radio signal strength of a broadcast control channel.

27. The mobile station according to any of the claims 20 to 26, **characterized by** memory means (212) storing at least one of said first and second threshold values and/or notations of said first (62, 63) and second (61) carrier duplex entity.

## Patentansprüche

1. Verfahren der Trägerauswahl für eine Mobilstation (11) eines einen Spektrumsblock (51) verwendenden Zellkommunikationssystems (1), mit zumindest einer ersten (62, 63) und einer zweiten (63) Trägerduplexentität, wobei die Trägerduplexentität (61, 62, 63) als eine Anzahl von Trägern definiert ist, die zusammen sowohl Aufwärts- als auch Abwärtskommunikation bereitstellen, wobei die Anzahl gleich oder größer als Eins ist, umfassend die Schritte:
Auswählen einer Kandidaten-Trägerduplexentität für die Mobilstation (11); und
Verriegeln der Mobilstation (11) zu einem Abwärtsträger der Kandidaten-Trägerduplexentität,
**gekennzeichnet durch** den Schritt:
Erhalten eines mit einer Wahrscheinlichkeit für die Mobilstation (11) zur Erzeugung von Interferenz mit angrenzenden externen Spektrumsblöcken (52), die von einem externen Kommunikationssystem (2) verwendet werden, assoziierten Maßes, wobei ein niedriger Wert des Maßes mit einer hohen Interferenzwahrscheinlichkeit verbunden ist, wobei das Maß ohne jegliche Kommunikation zwischen dem zellulären Kommunikationssystem (1) und dem externen System (2) erhalten wird und einzig auf der Messung eines Signals basiert, das vom zellulären Kommunikationssystem (1) ausgeht, wobei der Auswahlschritt wiederum das Auswählen der ersten Trägerduplexentität (62) als besagter Kandidaten-Trägerduplexentität umfasst, falls das Maß niedriger als ein erster Schwellenwert ist, wobei die erste Trägerduplexentität (62, 63) eine größere Frequenztrennung gegenüber den externen Spektrumsblöcken (52) als die zweite Trägerduplexentität (61) aufweist.

2. Verfahren gemäß Anspruch 1, **dadurch gekennzeichnet, dass** der Auswahlschritt weiterhin umfasst Auswählen der zweiten Trägerduplexentität (61) als besagter Kandidaten-Trägerduplexentität, falls das Maß einen zweiten Schwellenwert übersteigt, wobei der zweite Schwellenwert gleich oder größer als der erste Schwellenwert ist.

3. Verfahren gemäß Anspruch 2, **dadurch gekennzeichnet, dass** der zweite Schwellenwert größer als der erste Schwellenwert ist.

4. Verfahren gemäß Anspruch 1, **gekennzeichnet durch** den weiteren Schritt:
Durchführen irgendeiner Anrufeinrichtung und von nachfolgendem Verkehr auf der mit dem abwärts gerichteten Träger assoziierten Trägerduplexentität, mit der die Mobilstation (11) zum Zeitpunkt für die Anrufeinrichtung verriegelt ist.

5. Verfahren gemäß einem der Ansprüche 1 bis 4, **gekennzeichnet durch** ein Übertragen des ersten und/oder zweiten Schwellenwertes an die Mobilstation (11) nach Anforderung **durch** die Mobilstation (11) oder nach Registrierung beim System (1).

6. Verfahren gemäß einem der Ansprüche 1 bis 5, **gekennzeichnet durch** Übertragen von Notationen der ersten (62, 63) und zweiten (61) Trägerduplexentität an die Mobilstation (11) nach Aufforderung **durch** die Mobilstation (11) oder nach Registrierung **durch** das System.

7. Verfahren gemäß einem der Ansprüche 1 bis 6, **dadurch gekennzeichnet, dass** die Mobilstation (11) eine Aufwärtsleistungssteuerung aufweist und das Maß zumindest teilweise auf einem Ausbreitungsverlust aus einer nächsten eigenen Basisstation (21) basiert.

8. Verfahren gemäß Anspruch 7, **dadurch gekennzeichnet, dass** das Maß abhängig von der Funksignalstärke eines Rundfunksteuerkanals ist.

9. Verfahren gemäß einem der Ansprüche 1 bis 8, **gekennzeichnet durch** Adaptieren des ersten und/oder zweiten Schwellenwertes basierend auf Verkehrslast und aufgezeichneter Historie von Verbindungsqualität und Versagen.

10. Verfahren gemäß einem der Ansprüche 1 bis 9, **gekennzeichnet durch** Speichern des ersten und/oder zweiten Schwellenwerts in einer Hardware in der Mobilstation (11).

11. Verfahren gemäß einem der Ansprüche 1 bis 10, **gekennzeichnet durch** Speichern von Notationen der ersten (62, 63) und zweiten (61) Trägerduplexentität in Hardware in der Mobilstation (11).

12. Zellkommunikationssystem (1), umfassend:
eine Anzahl von Basisstationen (21) mit Mitteln zur Kommunikation mit Mobilstationen (11) und unter Verwendung eines Spektrumsblocks (51), aufweisend zumindest eine erste (62, 63) und eine zweite (61) Trägerduplexentität, wobei die Trägerduplexentität (61, 62, 63) als eine Anzahl von Trägern definiert ist, die gemeinsam sowohl Aufwärts- als auch Abwärtskommunikation bereitstellen, wobei die Anzahl gleich oder größer als Eins ist;
Auswahlmittel zum Auswählen einer Kandidaten-Trägerduplexentität; und
zumindest eines der Mittel der folgenden Liste:
Mittel zum Verriegeln von Mobilstationen (11), die in einem Bereitschaftsmodus sind, an einen Abwärtsträger der Kandidaten-Trägerduplexentität;
Mittel zum Wiederverriegeln von Mobilstationen (11), die in einem Bereitschaftsverriegelungsmodus sind, mit einem Abwärtsträger der Kandidaten-Trägerduplexentität, falls der Abwärtsträger ein anderer ist als ein Abwärtsträger, an den die Mobilstationen (11) derzeit verriegelt sind; und
Mittel zum Durchführen einer Trägerübergabe an die Kandidat-Trägerduplexentität, falls die Kandidaten-Trägerduplexentität eine andere ist als die Trägerduplexentität, die derzeit von den Mobilstationen verwendet wird,
**gekennzeichnet durch**:
Mittel zum Erhalten eines mit einer Wahrscheinlichkeit dafür, dass die Mobilstation (11) Interferenz mit angrenzenden externen Spektrumsblöcken (52) produzieren, die von einem externen Kommunikationssystem (2) verwendet werden, assoziierten Maßes, wobei ein niedriger Wert des Maßes mit einer hohen Interferenzwahrscheinlichkeit verbunden ist, wobei das Maß ohne jegliche Kommunikation zwischen dem zellulären Kommunikationssystem (1) und dem externen System (2) erhalten wird und ausschließlich auf Messung eines aus dem zellulären Kommunikationssystem (1) ausgehenden Signals basiert, wobei das Auswahlmittel mit dem Mittel zum Erhalten des Maßes verbunden ist und zum Auswählen der ersten Trägerduplexentität (62, 63) als besagte Kandidaten-Trägerduplexentität ausgelegt ist, falls das Maß niedriger ist als ein erster Schwellenwert, wobei die erste Trägerduplexentität (62, 63) eine größere Frequenztrennung gegenüber den externen Spektrumsblöcken (52) aufweist als die zweite Trägerduplexentität (61).

13. System gemäß Anspruch 12, **gekennzeichnet durch** Mittel zum Durchführen irgendeiner Anrufeinrichtung und von nachfolgendem Verkehr auf der Trägerduplexentität, die mit dem Abwärtsträger assoziiert ist, mit welchen Mobilstationen (11), die in einem Bereitschaftsverriegelungsmodus sind, zum Zeitpunkt der Anrufeinrichtung verriegelt sind.

14. System gemäß Anspruch 12 oder 13, **dadurch gekennzeichnet, dass** das Auswahlmittel wiederum Mittel zum Auswählen der zweiten Trägerduplexentität (61) als besagter Kandidaten-Trägerduplexentität umfasst, falls das Maß einen zweiten Schwellenwert übersteigt, wobei der zweite Schwellenwert gleich oder größer als der erste Schwellenwert ist.

15. System gemäß Anspruch 14, **dadurch gekennzeichnet, dass** der zweite Schwellenwert größer als der erste Schwellenwert ist.

16. System gemäß einem der Ansprüche 12 bis 15, **gekennzeichnet durch** Aufwärtsleistungssteuermittel und **dadurch**, dass das Maß zumindest teilweise auf einem Ausbreitungsverlust aus einer nächsten eigenen Basisstation (21) basiert.

17. System gemäß Anspruch 16, **dadurch gekennzeichnet, dass** das Maß abhängig von einer Funksignalstärke auf einem Rundfunksteuerkanal ist.

18. System gemäß einem der Ansprüche 12 bis 17, **gekennzeichnet durch** Übertragungsmittel (228), den ersten und/oder zweiten Schwellenwert und/oder Notationen der ersten (62, 63) und zweiten (61) Trägerduplexentität übertragen.

19. System gemäß einem der Ansprüche 12 bis 18, **gekennzeichnet durch** Mittel (224), welche den ersten und/oder zweiten Schwellenwert anpassen, basierend auf Verkehrslast und aufgezeichneter Historie an Verbindungsqualität und Ausfällen.

20. Mobilstation (11) in einem Zellkommunikationssystem (1), der einen Spektrumsblock (51) verwendet, aufweisend zumindest eine erste (62, 63) und eine zweite (61) Trägerduplexentität, wobei die Trägerduplexentität (61, 62, 63) als eine Anzahl von Trägern definiert ist, die gemeinsam sowohl Aufwärts- als auch Abwärtskommunikation bereitstellen; umfassend:
Auswahlmittel (206) zum Auswählen einer Kandidaten-Trägerduplexentität für die Mobilstation (11); und
zumindest eines der Mittel der folgenden Liste:
Mittel (200) zum Verriegeln der Mobilstation (11) an einen Abwärtsträger der Kandidaten-Trägerduplexentität beim Verriegeln in das Kommunikationssystem (1) von einem Bereitschaftsmodus zu einem Bereitschaftsverriegelungsmodus;
Mittel (202) zum Wiederverriegeln der Mobilstation (11) mit einem Abwärtsträger der Kandidaten-Trägerduplexentität, falls der Abwärtsträger ein anderer ist als ein Abwärtsträger, an den die Mobilstation (11) derzeit verriegelt ist; und
Mittel (204) zum Durchführen einer Trägerübergabe an die Kandidat-Trägerduplexentität, falls die Kandidaten-Trägerduplexentität eine andere ist als die Trägerduplexentität, die derzeit von der Mobilstation (11) verwendet wird,
**gekennzeichnet durch**:
Mittel (202) zum Erhalten eines mit einer Wahrscheinlichkeit dafür, dass die Mobilstation (11) Interferenz mit angrenzenden externen Spektrumsblöcken (52) produzieren, die von einem externen Kommunikationssystem (2) verwendet werden, assoziierten Maßes, wobei ein niedriger Wert des Maßes mit einer hohen Interferenzwahrscheinlichkeit verbunden ist, wobei das Maß ohne jegliche Kommunikation zwischen dem zellulären Kommunikationssystem (1) und dem externen System (2) erhalten wird und ausschließlich auf Messung eines aus dem zellulären Kommunikationssystem (1) ausgehenden Signals basiert, wobei das Auswahlmittel (206) mit dem Mittel (208) zum Erhalten des Maßes verbunden ist und zum Auswählen der ersten Trägerduplexentität (62, 63) als besagte Kandidaten-Trägerduplexentität ausgelegt ist, falls das Maß niedriger ist als ein erster Schwellenwert, wobei die erste Trägerduplexentität (62, 63) eine größere Frequenztrennung gegenüber den externen Spektrumsblöcken (52) aufweist als die zweite Trägerduplexentität (61).

21. Mobilstation gemäß Anspruch 20, **gekennzeichnet durch** Mittel zum Durchführen irgendeiner Anrufeinrichtung und von nachfolgendem Verkehr auf der Trägerduplexentität, die mit dem Abwärtsträger assoziiert ist, mit welchem die Mobilstation (11) zum Zeitpunkt der Anrufeinrichtung verriegelt ist.

22. Mobilstation gemäß Anspruch 20 oder 21, **dadurch gekennzeichnet, dass** das Auswahlmittel (206) wiederum Mittel zum Auswählen der zweiten Trägerduplexentität (61) als besagter Kandidaten-Trägerduplexentität umfasst, falls das Maß einen zweiten Schwellenwert übersteigt, wobei der zweite Schwellenwert gleich oder größer als der erste Schwellenwert ist.

23. Mobilstation gemäß Anspruch 22, **dadurch gekennzeichnet, dass** der zweite Schwellenwert größer als der erste Schwellenwert ist.

24. Mobilstation gemäß einem der Ansprüche 20 bis 23, **gekennzeichnet durch** Empfängermittel (214) zum Empfangen des ersten und/oder zweiten Schwellenwerts und/oder von Notationen der ersten (62, 63) und zweiten (61) Trägerduplexentität.

25. Mobilstation gemäß einem der Ansprüche 20 bis 24, **gekennzeichnet durch** Aufwärtsleistungssteuermittel (210) und **dadurch**, dass das Maß zumindest teilweise auf einem Ausbreitungsverlust aus einer nächsten eigenen Basisstation (21) basiert.

26. Mobilstation gemäß Anspruch 25, **dadurch gekennzeichnet, dass** das Maß abhängig von einer Funksignalstärke auf einem Rundfunksteuerkanal ist.

27. Mobilstation gemäß einem der Ansprüche 20 bis 26, **gekennzeichnet durch** Speichermittel (212), die den ersten und/oder zweiten Schwellenwert speichern und/oder Notationen der ersten (62, 63) und zweiten (61) Trägerduplexentität.

## Revendications

1. Procédé de sélection de porteuse pour une station mobile (11) d'un système (1) de communication cellulaire utilisant un bloc spectral (51) ayant au moins une première (62, 63) et une seconde (61) entités duplex de porteuses, ladite entité duplex de porteuses (61, 62, 63) étant définie comme un nombre de porteuses qui assurent ensemble une communication à la fois de liaison montante et de liaison descendante, ledit nombre étant égal ou supérieur à 1, comprenant les étapes qui consistent :
à sélectionner une entité duplex de porteuses candidates pour ladite station mobile (11) ; et
à verrouiller ladite station mobile (11) sur une porteuse de liaison descendante de ladite entité duplex de porteuses candidates,
**caractérisé par** l'étape qui consiste :
à obtenir une mesure associée à une probabilité pour ladite station mobile (11) de produire une interférence avec des blocs spectraux externes adjacents (52) utilisés par un système de communication externe (2), une basse valeur de ladite mesure étant reliée à une haute probabilité d'interférence, ladite mesure étant obtenue sans communication quelconque entre ledit système de communication cellulaire (1) et ledit système externe (2) et étant basée uniquement sur une mesure d'un signal ayant pour origine ledit système de communication cellulaire (1), ladite étape de sélection comprenant elle-même la sélection de ladite première entité duplex de porteuses (62) en tant que ladite entité duplex de porteuses candidates si ladite mesure est inférieure à une première valeur de seuil, ladite première entité duplex de porteuses (62, 63) ayant une séparation de fréquence plus grande par rapport auxdits blocs spectraux externes (52) que ladite seconde entité duplex de porteuse (61).

2. Procédé selon la revendication 1, **caractérisé en ce que** ladite étape de sélection comprend en outre la sélection de ladite seconde entité duplex (61) de porteuse en tant que ladite entité duplex de porteuses candidates si ladite mesure dépasse une seconde valeur de seuil, ladite seconde valeur de seuil étant égale ou supérieure à ladite première valeur de seuil.

3. Procédé selon la revendication 2, **caractérisé en ce que** ladite seconde valeur de seuil est plus grande que ladite première valeur de seuil.

4. Procédé selon la revendication 1, **caractérisé par** l'autre étape qui consiste :
à exécuter tout établissement d'appel et tout trafic suivant sur l'entité duplex de porteuse associée à la porteuse de liaison descendante, sur laquelle ladite station mobile (11) est verrouillée au moment dudit établissement d'appel.

5. Procédé selon l'une quelconque des revendications 1 à 4, **caractérisé par** la transmission d'au moins l'une desdites première et seconde valeurs de seuil à ladite station mobile (11) à la suite d'une demande par ladite station mobile (11), ou à la suite d'un enregistrement audit système (1).

6. Procédé selon l'une quelconque des revendications 1 à 5, **caractérisé par** la transmission de notations desdites première (62, 63) et seconde (61) entités duplex de porteuses à ladite station mobile (11) à la suite d'une demande par ladite station mobile (11) ou à la suite d'un enregistrement audit système (1).

7. Procédé selon l'une quelconque des revendications 1 à 6, **caractérisé en ce que** ladite station mobile (11) comporte une commande de puissance de liaison montante et ladite mesure est basée au moins partiellement sur une perte de propagation à partir de station de base propre (21) la plus proche.

8. Procédé selon la revendication 7, **caractérisé en ce que** ladite mesure dépend d'un niveau de signal radio d'un canal de commande de radiodiffusion.

9. Procédé selon l'une quelconque des revendications 1 à 8, **caractérisé par** l'adaptation d'au moins une desdites première et seconde valeurs de seuil sur la base d'une charge de trafic et d'un historique enregistré de qualité et de manque de liaison.

10. Procédé selon l'une quelconque des revendications 1 à 9, **caractérisé par** le stockage d'au moins une desdites première et seconde valeurs de seuil dans du matériel dans ladite station mobile (11).

11. Procédé selon l'une quelconque des revendications 1 à 10, **caractérisé par** le stockage de notations desdites première (62, 63) et seconde (61) entités duplex de porteuses dans du matériel dans ladite station mobile (11).

12. Système de communication cellulaire (1), comportant :
un certain nombre de stations de base (21) ayant des moyens pour une communication avec des stations mobiles (11) et utilisant un bloc spectral (51) ayant au moins une première (62, 63) et une seconde (61) entités duplex de porteuses, ladite entité duplex de porteuses (61, 62, 63) étant définie comme un nombre de porteuses qui assurent ensemble une communication à la fois de liaison montante et de liaison descendante, ledit nombre étant égal ou supérieur à 1 ;
des moyens de sélection destinés à sélectionner une entité duplex de porteuse candidate ; et
au moins l'un des moyens de la liste suivante :
des moyens destinés à verrouiller des stations mobiles (11) se trouvant dans un mode de repos sur une porteuse de liaison descendante de ladite entité duplex de porteuses candidates ;
des moyens destinés à reverrouiller des stations mobiles (11) se trouvant dans un mode verrouillé de repos sur une porteuse de liaison descendante de ladite entité duplex de porteuses candidates si ladite porteuse de liaison descendante est différente d'une porteuse de liaison descendante sur laquelle lesdites stations mobiles (11) sont présentement verrouillées ; et
des moyens destinés à effectuer un transfert de porteuse vers ladite entité duplex de porteuses candidates si ladite entité duplex de porteuses candidates est différente d'une entité duplex de porteuses présentement utilisée par lesdites stations mobiles (11) ;
**caractérisé par** :
des moyens pour obtenir une mesure associée à une probabilité pour lesdites stations mobiles (11) de produire une interférence avec des blocs spectraux externes adjacents (52) utilisés par un système de communication externe (2), une basse valeur de ladite mesure étant reliée à une haute probabilité d'interférence, ladite mesure étant obtenue sans communication quelconque entre ledit système de communication cellulaire (1) et ledit système externe (2) et étant basée uniquement sur une mesure d'un signal ayant pour origine ledit système de communication cellulaire (1), lesdits moyens de sélection étant connectés auxdits moyens pour obtenir ladite mesure et étant agencés pour sélectionner ladite première entité duplex de porteuses (62, 63) en tant que ladite entité duplex de porteuses candidates si ladite mesure est inférieure à une première valeur de seuil, ladite première entité duplexe de porteuses (62, 63) ayant une séparation de fréquence plus grande par rapport auxdits blocs spectraux externes (52) que ladite seconde entité duplex de porteuse (61).

13. Système selon la revendication 12, **caractérisé par** des moyens destinés à exécuter tout établissement d'appel et tout trafic suivant sur l'entité duplex de porteuse associée à la porteuse de liaison descendante, sur laquelle des stations mobiles (11) en mode verrouillé de repos sont verrouillées au moment dudit établissement d'appel.

14. Système selon la revendication 12 ou 13, **caractérisé en ce que** lesdits moyens de sélection comprennent eux-mêmes des moyens destinés à sélectionner ladite seconde entité duplex (61) de porteuse en tant que ladite entité duplex de porteuses candidates, si ladite mesure dépasse une seconde valeur de seuil, ladite seconde valeur de seuil étant égale ou supérieure à ladite première valeur de seuil.

15. Système selon la revendication 14, **caractérisé en ce que** ladite seconde valeur de seuil est supérieure à ladite première valeur de seuil.

16. Système selon l'une quelconque des revendications 12 à 15, **caractérisé par** des moyens de commande de puissance de liaison montante et en ce que ladite mesure est basée au moins partiellement sur une perte de propagation à partir d'une station de base propre la plus proche (21).

17. Système selon la revendication 16, **caractérisé en ce que** ladite mesure dépend d'un niveau de signal radio d'un canal de commande de radiodiffusion.

18. Système selon l'une quelconque des revendications 12 à 17, **caractérisé par** des moyens d'émission (228) émettant au moins l'une desdites première et seconde valeurs de seuil et/ou des notations desdites première (62, 63) et seconde (61) entités duplex de porteuses.

19. Système selon l'une quelconque des revendications 12 à 18, **caractérisé par** des moyens (224) adaptant au moins l'une desdites première et seconde valeurs de seuil sur la base d'une charge de trafic et d'un historique enregistré de qualité et de manque de liaison.

20. Station mobile (11) d'un système de communication cellulaire (1) utilisant un bloc spectral (51) ayant au moins une première (62, 63) et une seconde (61) entités duplex de porteuses, ladite entité duplex de porteuses (61, 62, 63) étant définie comme un nombre de porteuses qui assurent ensemble une communication à la fois de liaison montante et de liaison descendante, comportant :
des moyens de sélection (206) destinés à sélectionner une entité duplex de porteuses candidates pour ladite station mobile (11) ; et
au moins l'un des moyens de la liste suivante :
des moyens (200) destinés à verrouiller ladite station mobile (11) sur une porteuse de liaison descendante de ladite entité duplex de porteuses candidates à la suite d'un verrouillage dans ledit système de communication (1) depuis un mode de repos à un mode verrouillé de repos ;
des moyens (202) destinés à reverrouiller ladite station mobile (11) sur une porteuse de liaison descendante de ladite entité duplex de porteuses candidates si ladite porteuse de liaison descendante est différente d'une porteuse de liaison descendante sur laquelle ladite station mobile (11) est présentement verrouillée ; et
des moyens (204) destinés à effectuer un transfert de porteuses vers ladite entité duplex de porteuses candidates si ladite entité duplex de porteuses candidates est différente d'une entité duplex de porteuses présentement utilisée par ladite station mobile (11),
**caractérisée par** :
des moyens (208) destinés à obtenir une mesure associée à une probabilité pour ladite station mobile (11) de produire une interférence avec des blocs spectraux externes adjacents (52) utilisés par un système de communication externe (2), une basse valeur de ladite mesure étant retenue à une haute probabilité d'interférence, ladite mesure étant obtenue sans communication quelconque entre ledit système de communication cellulaire (1) et ledit système externe (2) et étant basée uniquement sur une mesure d'un signal ayant pour origine ledit système de communication cellulaire (1), lesdits moyens de sélection (206) étant connectés auxdits moyens (208) pour obtenir ladite mesure et étant agencés pour sélectionner ladite première entité duplex de porteuses (62, 63) en tant que ladite entité duplex de porteuses candidates si ladite mesure est inférieure à une première valeur de seuil, ladite première entité duplex de porteuses (62, 63) ayant une séparation de fréquence plus grande par rapport auxdits blocs spectraux externes (52) que ladite seconde entité duplex de porteuse (61).

21. Station mobile selon la revendication 20, **caractérisée par** des moyens destinés à exécuter tout établissement d'appel et tout trafic suivant sur l'entité duplex de porteuse associée à la porteuse de liaison descendante, sur laquelle ladite station mobile (11) est verrouillée au moment dudit établissement d'appel.

22. Station mobile selon la revendication 20 ou 21, **caractérisée en ce que** lesdits moyens de sélection (206) comprennent eux-mêmes des moyens destinés à sélectionner ladite seconde entité duplex de porteuses (61) en tant que ladite entité duplex de porteuses candidates si ladite mesure dépasse une seconde valeur de seuil, ladite seconde valeur de seuil étant égale ou supérieure à ladite première valeur de seuil.

23. Station mobile selon la revendication 22, **caractérisée en ce que** ladite valeur de seuil est supérieure à ladite première valeur de seuil.

24. Station mobile selon l'une quelconque des revendications 20 à 23, **caractérisée par** des moyens récepteurs (214) destinés à recevoir au moins l'une desdites première et seconde valeurs de seuil et/ou des notations desdites première (62, 63) et seconde (61) entités duplex de porteuses.

25. Station mobile selon l'une quelconque des revendications 20 à 24, **caractérisée par** des moyens (210) de commande de puissance de liaison montante et en ce que ladite mesure est basée au moins partiellement sur une perte de propagation à partir d'une station de base propre la plus proche (21).

26. Station mobile selon la revendication 25, **caractérisée en ce que** ladite mesure dépend du niveau d'un signal radio d'un canal de commande de radiodiffusion.

27. Station mobile selon l'une quelconque des revendications 20 à 26, **caractérisée par** des moyens à mémoire (212) stockant au moins l'une desdites première et seconde valeurs de seuil et/ou des notations desdites première (62, 63) et seconde (61) entités duplex de porteuses.
